# EUROPEAN PATENT APPLICATION

(11) **EP 2 244 038 A1**
(43) Date of publication of application: **27.10.2010**
(21) Application number: 09702086.1
(22) Date of filing: 08.01.2009
(51) Int. Cl.: F25B 1/10

(54) **REFRIGERATION DEVICE**

(30) Priority: 16.01.2008 JP 2008006998
(71) Applicant: Daikin Industries, Ltd., Osaka 530-8323 (JP)
(72) Inventor: OKAMOTO, Masakazu, Sakai-shi Osaka 591-8511 (JP)
(74) Representative: HOFFMANN EITLE
(86) International application number: PCT/JP2009/000047
(87) International publication number: WO 2009/090860

(57) **Abstract**

In a heat-source unit (15) which heats heating-medium water inside of a heat storage tank (16), a refrigerant circuit (30) is provided with a low-stage compressor (52), a high-stage compressor (62) and an expander (65) for power recovery. The low-stage compressor (52) is rotated by an electric motor (54) connected to a drive shaft (53) thereof. The high-stage compressor (62) is rotated by an electric motor (64) and the expander (65) connected to a drive shaft (63) thereof. A high-stage control section of a controller (90) adjusts the rotational speed of the high-stage compressor (62) in such a way that a value measured by an outlet water-temperature sensor (77) becomes a target temperature. A low-stage control section adjusts the rotational speed of the low-stage compressor (52) in such a way that a value measured by a discharge pressure sensor (74) becomes a target high pressure.

## Description

### TECHNICAL FIELD

The present invention relates to an improvement in the performance of a refrigerating apparatus which includes a refrigerant circuit having an expander for power recovery connected thereto.

### BACKGROUND ART

Conventionally, a refrigerating apparatus is known which conducts a two-stage compression refrigeration cycle by circulating a refrigerant through a refrigerant circuit formed by connecting a low-stage compressor and a high-stage compressor. Patent Document 1 discloses, in FIG. 4, a refrigerating apparatus conducting a two-stage compression refrigeration cycle which includes a refrigerant circuit provided with an expander recovering power from a high-pressure refrigerant.

Specifically, in the refrigerating apparatus disclosed in FIG. 4 of Patent Document 1, the expander is connected to the drive shaft of a high-stage compressor, expands a high-pressure refrigerant to thereby obtain power and drives the high-stage compressor with the power, while a prime mover separate from the expander drives a low-stage compressor. In the refrigerant circuit of the refrigerating apparatus, a refrigerant compressed in the low-stage compressor is further compressed in the high-stage compressor, thereafter is sent to a gas cooler and dissipates heat there, expands when passing the expander and an expansion valve in order and reaches an evaporator.

In the refrigerating apparatus disclosed in Patent Document 1, the expander is connected to the drive shaft of the high-stage compressor, and hence, the rotational speed of the expander is the same as that of the high-stage compressor. This means that the ratio of the volume of a refrigerant sucked per unit time by the high-stage compressor to the volume of a refrigerant flowing per unit time into the expander is always constant. If an attempt is made to set the high pressure or low pressure of a refrigeration cycle to a desired value, the mass of a refrigerant permitted to flow per unit time into the expander can be smaller than the mass of a refrigerant permitted to be sucked per unit time by the high-stage compressor.

Therefore, in the refrigerating apparatus disclosed in FIG. 4 of Patent Document 1, the refrigerant circuit is provided with a bypass circuit for allowing a refrigerant to bypass the expander, thereby enabling a refrigerant to flow into the expander as well as the bypass circuit in an operation state where the mass of a refrigerant permitted to flow per unit time into the expander is smaller than the mass of a refrigerant permitted to be sucked per unit time by the high-stage compressor.

### CITATION LIST

### PATENT DOCUMENT

PATENT DOCUMENT 1: Japanese Patent Publication No. 2000-234814

### SUMMARY OF THE INVENTION

### TECHNICAL PROBLEM

In the refrigerating apparatus disclosed in Patent Document 1 which includes the refrigerant circuit provided with the bypass circuit, a high-pressure refrigerant can be sent into both the expander and the bypass circuit, thereby setting an operation state of the refrigerating apparatus on a condition for making the mass flow rate of a refrigerant in the expander lower than the mass flow rate of a refrigerant in the compressor. This makes it possible to set an operation state of the refrigerating apparatus suitably according to diverse operation conditions.

In the refrigerating apparatus disclosed in Patent Document 1, however, if a high-pressure refrigerant flows into both the expander and the bypass circuit, then the quantity of the refrigerant flowing into the expander decreases by the quantity of the refrigerant flowing into the bypass circuit. This lowers the power obtained by the expansion of the high-pressure refrigerant in the expander, causing the refrigerating apparatus to operate less efficiently.

In view of the problem, it is an object of the present invention to provide a refrigerating apparatus capable of operating efficiently and setting an operation state thereof suitably according to diverse operation conditions.

### SOLUTION TO THE PROBLEM

A refrigerating apparatus according to a first aspect of the present invention conducts a two-stage compression refrigeration cycle by circulating a refrigerant through a refrigerant circuit (30), the refrigerant circuit (30) being formed by connecting: a low-stage compressor (52) and a high-stage compressor (62) each rotating to compress a refrigerant; an expander (65) connected to a drive shaft (63) of the high-stage compressor (62) and driving the high-stage compressor (62) with power generated by the expansion of a high-pressure refrigerant; a gas-liquid separator (45) separating an intermediate-pressure refrigerant flowing from the expander (65) into a liquid refrigerant and a gas refrigerant and supplying the gas refrigerant to the suction side of the high-stage compressor (62); a low-stage expansion mechanism (49) expanding a liquid refrigerant flowing from the gas-liquid separator (45); a utilization-side heat exchanger (40); and a heat-source-side heat exchanger (44). The refrigerating apparatus includes a control means (90) which executes: a first control operation for adjusting the rotational speed of the high-stage compressor (62) in such a way that a heating capacity or a cooling capacity obtained in the utilization-side heat exchanger (40) becomes a predetermined target capacity; and a second control operation for adjusting the rotational speed of the low-stage compressor (52) in such a way that a high pressure in the refrigeration cycle conducted through the refrigerant circuit (30) becomes a predetermined target high pressure.

The refrigerating apparatus according to the first aspect conducts a two-stage compression refrigeration cycle through the refrigerant circuit (30). Specifically, an intermediate-pressure refrigerant discharged from the low-stage compressor (52) and an intermediate-pressure gas refrigerant sent from the gas-liquid separator (45) flow together and then are sucked into the high-stage compressor (62) and compressed there. The high-pressure refrigerant discharged from the high-stage compressor (62) is sent to either of the utilization-side heat exchanger (40) and the heat-source-side heat exchanger (44) which works as a radiator and then dissipates heat. After dissipating heat, the high-pressure refrigerant expands as passing the expander (65), turns to an intermediate-pressure gas-liquid two-phase refrigerant, thereafter flows into the gas-liquid separator (45) and separates into a liquid refrigerant and a gas refrigerant. In the expander (65), the high-pressure refrigerant expands to thereby generate power, and the power is used for driving the high-stage compressor (62). The intermediate-pressure liquid refrigerant flowing from the gas-liquid separator (45) expands as passing the low-stage expansion mechanism (49), turns to a low-pressure refrigerant and is sent to either of the utilization-side heat exchanger (40) and the heat-source-side heat exchanger (44) which works as an evaporator. Thereafter, the low-pressure refrigerant absorbs heat and evaporates and then is sucked into the low-stage compressor (52) and compressed there.

In the refrigerating apparatus according to the first aspect, the expander (65) is connected to the drive shaft (63) of the high-stage compressor (62), and hence, the rotational speed of the high-stage compressor (62) becomes always equal to that of the expander (65). On the other hand, in this refrigerating apparatus, the expander (65) is not connected to a drive shaft (53) of the low-stage compressor (52), and hence, the rotational speed of the low-stage compressor (52) can be set to a value different from that of the expander (65).

As the mass flow rate of a refrigerant passing the utilization-side heat exchanger (40) heightens or lowers, the heating capacity obtained in the utilization-side heat exchanger (40) working as a radiator or the cooling capacity obtained in the utilization-side heat exchanger (40) working as an evaporator rises or falls. Meanwhile, a variation in the mass flow rate of a refrigerant passing the utilization-side heat exchanger (40) changes the mass flow rate of a refrigerant passing the expander (65).

Therefore, the control means (90) according to the first aspect executes the first control operation for adjusting the rotational speed of the high-stage compressor (62) in such a way that the heating capacity or the cooling capacity obtained in the utilization-side heat exchanger (40) becomes a predetermined target capacity. As described above, the rotational speed of the expander (65) is always equal to the rotational speed of the high-stage compressor (62). Assuming that the density of a refrigerant flowing into the expander (65) is constant, the higher the rotational speed of the expander (65) becomes, the higher the mass flow rate of the refrigerant passing the expander (65) becomes. The control means (90) adjusts the rotational speed of the high-stage compressor (62) to thereby change the mass flow rate of the refrigerant passing the high-stage compressor (62) or the expander (65). As a result, the mass flow rate of the refrigerant passing the utilization-side heat exchanger (40) becomes the value at which the utilization-side heat exchanger (40) obtains the target capacity.

In short, the control means (90) executes the first control operation to thereby set the rotational speed of the high-stage compressor (62) and the expander (65) to the value at which the heating capacity or the cooling capacity obtained in the utilization-side heat exchanger (40) becomes the target capacity. Meanwhile, the mass flow rate of the refrigerant passing the high-stage compressor (62) or the expander (65) is determined by the rotational speed thereof and the density of a refrigerant flowing into them. In the refrigerant circuit (30) according to the first aspect, the mass flow rate of a refrigerant passing the high-stage compressor (62) equates to the mass flow rate of a refrigerant passing the expander (65). Accordingly, in order to set the high pressure of the refrigeration cycle to the target high pressure, the mass flow rate of the refrigerant passing the high-stage compressor (62) needs to equate to the mass flow rate of the refrigerant passing the expander (65) when the pressure of the refrigerant flowing into the expander (65) is the target high pressure.

Therefore, the control means (90) according to the first aspect executes the second control operation for adjusting the rotational speed of the low-stage compressor (52) in such a way that the high pressure of the refrigeration cycle conducted through the refrigerant circuit (30) becomes the predetermined target high pressure. A variation in the rotational speed of the low-stage compressor (52) changes the pressure of a refrigerant discharged from the low-stage compressor (52) to thereby change the density of the refrigerant sucked into the high-stage compressor (62). Specifically, the higher the pressure of the refrigerant discharged from the low-stage compressor (52) becomes, the higher the density of the refrigerant sucked into the high-stage compressor (62) becomes. On the other hand, the lower the pressure of the refrigerant discharged from the low-stage compressor (52) becomes, the lower the density of the refrigerant sucked into the high-stage compressor (62) becomes. Therefore, the control means (90) executes the second control operation and adjusts the rotational speed of the low-stage compressor (52) to thereby equate the mass flow rate of the refrigerant passing the high-stage compressor (62) to the mass flow rate of the refrigerant passing the expander (65) when the high pressure of the refrigeration cycle is the target high pressure. Consequently, the high pressure of the refrigeration cycle actually conducted through the refrigerant circuit (30) becomes the target high pressure.

According to a second aspect of the present invention, in the refrigerating apparatus according to the first aspect, the utilization-side heat exchanger (40) works as a radiator and the heat-source-side heat exchanger (44) works as an evaporator to thereby conduct a heating operation, and in the first control operation during the heating operation, the control means (90) uses the temperature of a heating fluid (heated fluid or fluid to be heated) after passing the utilization-side heat exchanger (40) as a physical quantity indicating a heating capacity obtained in the utilization-side heat exchanger (40) and adjusts the rotational speed of the high-stage compressor (62) in such a way that the temperature of the heating fluid after passing the utilization-side heat exchanger (40) becomes a predetermined target temperature.

A refrigerating apparatus (15) according to the second aspect can conduct the heating operation for heating a heating fluid through a heat exchange with a refrigerant in the utilization-side heat exchanger (40) during the heating operation. The temperature of the heating fluid after passing the utilization-side heat exchanger (40) (i.e., the heating fluid heated by the refrigerant in the utilization-side heat exchanger (40)) varies according to the heating capacity obtained in the utilization-side heat exchanger (40). Therefore, in the first control operation during the heating operation, the control means (90) uses the temperature of the heating fluid which has passed the utilization-side heat exchanger (40) as a physical quantity indicating a heating capacity obtained in the utilization-side heat exchanger (40). When the temperature of the heating fluid after passing the utilization-side heat exchanger (40) has become the target temperature, the decision can be made that the heating capacity obtained in the utilization-side heat exchanger (40) has become the target capacity. Utilizing this fact, the control means (90) adjusts the rotational speed of the high-stage compressor (62) in such a way that the temperature of the heating fluid which has passed the utilization-side heat exchanger (40) becomes the target temperature.

According to a third aspect of the present invention, in the refrigerating apparatus according to the first aspect, the utilization-side heat exchanger (40) works as a radiator and the heat-source-side heat exchanger (44) works as an evaporator to thereby conduct a heating operation, and during the heating operation, the control means (90) sets the target high pressure based on the temperature of a refrigerant flowing from the utilization-side heat exchanger (40) and the temperature of a heating fluid flowing into the utilization-side heat exchanger (40).

The refrigerating apparatus (15) according to the third aspect can conduct the heating operation for heating a heating fluid through a heat exchange with a refrigerant in the utilization-side heat exchanger (40) during the heating operation. During the heating operation, the control means (90) sets the target high pressure based on the temperature of the refrigerant flowing from the utilization-side heat exchanger (40) (i.e., the refrigerant dissipating heat to the heating fluid in the utilization-side heat exchanger (40)) and the temperature of the heating fluid flowing into the utilization-side heat exchanger (40) (i.e., the heating fluid before heated in the utilization-side heat exchanger (40)). Using the set target high pressure, the control means (90) conducts the second control operation.

According to a fourth aspect of the present invention, in the refrigerating apparatus according to the first aspect, the refrigerant circuit (30) is provided with an opening-variable expansion valve (49) as the low-stage expansion mechanism, and the control means (90) executes a third control operation for adjusting the opening of the expansion valve (49) in such a way that the superheat of a refrigerant sucked into the low-stage compressor (52) becomes a predetermined target value of superheat.

According to the fourth aspect, the refrigerant circuit (30) is provided with the opening-variable expansion valve (49) as the low-stage expansion mechanism. In the refrigerant circuit (30) according to this aspect, an intermediate-pressure liquid refrigerant flowing from the gas-liquid separator (45) expands when passing the expansion valve (49) as the low-stage expansion mechanism and thereby turns to a low-pressure refrigerant. In addition to the first control operation and the second control operation, the control means (90) according to this aspect executes the third control operation for adjusting the opening of the expansion valve (49) in such a way that the superheat of a refrigerant sucked into the low-stage compressor (52) becomes the predetermined target value of superheat. The opening of the expansion valve (49) is changed to thereby vary the mass flow rate or pressure of a refrigerant which passes the expansion valve (49) and flows into either of the utilization-side heat exchanger (40) and the heat-source-side heat exchanger (44) which works as an evaporator. Then, the heat exchanger working as the evaporator evaporates the refrigerant to thereby vary the superheat of the refrigerant sucked into the low-stage compressor (52).

According to a fifth aspect of the present invention, in the refrigerating apparatus according to the fourth aspect, the utilization-side heat exchanger (40) works as a radiator and the heat-source-side heat exchanger (44) works as an evaporator to thereby conduct a heating operation, and the control means (90) sets the target value of superheat based on the temperature of a refrigerant discharged from the high-stage compressor (62) during the heating operation.

The refrigerating apparatus (15) according to the fifth aspect can conduct the heating operation for heating a heating fluid through a heat exchange with a refrigerant in the utilization-side heat exchanger (40) during the heating operation. During the heating operation, the control means (90) sets the target value of superheat based on the temperature of a refrigerant discharged from the high-stage compressor (62) during the heating operation. A variation in the superheat of the refrigerant sucked into the low-stage compressor (52) varies the temperature of the refrigerant discharged from the low-stage compressor (52) to thereby vary the temperature of the refrigerant sucked into the high-stage compressor (62) and then vary the temperature of the refrigerant discharged from the high-stage compressor (62). Therefore, the control means (90) sets the target value of superheat based on the temperature of the refrigerant discharged from the high-stage compressor (62) and executes the third control operation using the set target value of superheat.

According to a sixth aspect of the present invention, in the refrigerating apparatus according to the first aspect, the utilization-side heat exchanger (40) works as a radiator and the heat-source-side heat exchanger (44) works as an evaporator to thereby conduct a heating operation for heating water through a heat exchange with a refrigerant in the utilization-side heat exchanger (40).

The refrigerating apparatus (15) according to the sixth aspect can conduct the heating operation for heating water through a heat exchange with a refrigerant in the utilization-side heat exchanger (40) to thereby generate hot water in the utilization-side heat exchanger (40) during the heating operation.

According to a seventh aspect of the present invention, in the refrigerating apparatus according to the first aspect, the refrigerant circuit (30) is provided with an internal heat exchanger (80) making a heat exchange between a refrigerant sent to the low-stage expansion mechanism (49) from the gas-liquid separator (45) and a refrigerant sucked into the low-stage compressor (52).

According to the seventh aspect, the refrigerant circuit (30) is provided with the internal heat exchanger (80) which makes a heat exchange between a refrigerant sent to the low-stage expansion mechanism (49) from the gas-liquid separator (45) and a refrigerant sucked into the low-stage compressor (52) to thereby cool the refrigerant flowing from the gas-liquid separator (45) and heat the refrigerant sucked into the low-stage compressor (52).

### ADVANTAGES OF THE INVENTION

In the refrigerating apparatus according to the present invention, the control means (90) executes: a first control operation for adjusting the rotational speed of the high-stage compressor (62) (i.e., the rotational speed of the expander (65)) in such a way that the heating capacity or cooling capacity obtained in the utilization-side heat exchanger (40) becomes a predetermined target capacity; and a second control operation for adjusting the rotational speed of the low-stage compressor (52) in such a way that the high pressure in the refrigeration cycle conducted through the refrigerant circuit (30) becomes a predetermined target high pressure.

Therefore, even if the control means (90) executes the first control operation to thereby fix the rotational speed of the high-stage compressor (62) and the expander (65), the control means (90) executes the second control operation to thereby change the density of a refrigerant sucked into the high-stage compressor (62) and adjust the mass flow rate of the refrigerant passing the high-stage compressor (62). As a result, even without the bypass circuit for allowing a refrigerant to partly bypass the expander (65) according to the prior art, the density of the refrigerant sucked into the high-stage compressor (62) can be adjusted to thereby equate the mass flow rate of the refrigerant discharged from the high-stage compressor (62) to the mass flow rate of the refrigerant discharged from the expander (65) if the high pressure in the refrigeration cycle is the target high pressure.

Therefore, the refrigerating apparatus according to the present invention is capable of sending the whole quantity of the refrigerant discharged from the high-stage compressor (62) into the expander (65) to thereby maximize the power obtained in the expander (65) and setting an operation state of the refrigeration cycle conducted through the refrigerant circuit (30) suitably according to various operation conditions.

According to the above second aspect, in the first control operation during the heating operation, the control means (90) uses the temperature of the heating fluid which has passed the utilization-side heat exchanger (40) as a physical quantity indicating the heating capacity obtained in the utilization-side heat exchanger (40). Therefore, the first control operation during the heating operation can be executed using the heating-fluid temperature which can be relatively easily measured, thereby simplifying the configuration of the refrigerating apparatus (15).

According to the above seventh aspect, the refrigerant circuit (30) is provided with the internal heat exchanger (80) which makes a heat exchange between a refrigerant sent to the low-stage expansion mechanism (49) from the gas-liquid separator (45) and a refrigerant sucked into the low-stage compressor (52). Therefore, the enthalpy of the refrigerant sent from the low-stage expansion mechanism (49) to either of the utilization-side heat exchanger (40) and the heat-source-side heat exchanger (44) which works as an evaporator can be reduced to thereby increase the quantity of heat absorbed by the refrigerant in the heat exchanger working as an evaporator. In addition, the temperature of the refrigerant sucked into the low-stage compressor (52) can be raised to thereby heighten the temperature of the refrigerant supplied from the high-stage compressor (62) to either of the utilization-side heat exchanger (40) and the heat-source-side heat exchanger (44) which works as a radiator.

### BRIEF DESCRIPTION OF THE DRAWINGS

[FIG. 1] FIG. 1 is a piping system diagram showing a schematic configuration of an air-conditioning system according to an embodiment of the present invention.
[FIG. 2] FIG. 2 is a block diagram showing a configuration of a controller according to the embodiment.
[FIG. 3] FIG. 3 is a flow chart showing a first control operation executed by the controller.
[FIG. 4] FIG. 4 is a flow chart showing a second control operation executed by the controller.
[FIG. 5] FIG. 5 is a flow chart showing a third control operation executed by the controller.
[FIG. 6] FIG. 6 is a piping system diagram showing a schematic configuration of an air-conditioning system according to a variation 1 of the embodiment.

### DESCRIPTION OF EMBODIMENTS

An embodiment of the present invention will be below described in detail with reference to the drawings. The embodiment corresponds to an air-conditioning system (10) which includes a heat-source unit (15) configured by a refrigerating apparatus according to the present invention.

### 〈Whole configuration of air-conditioning system〉

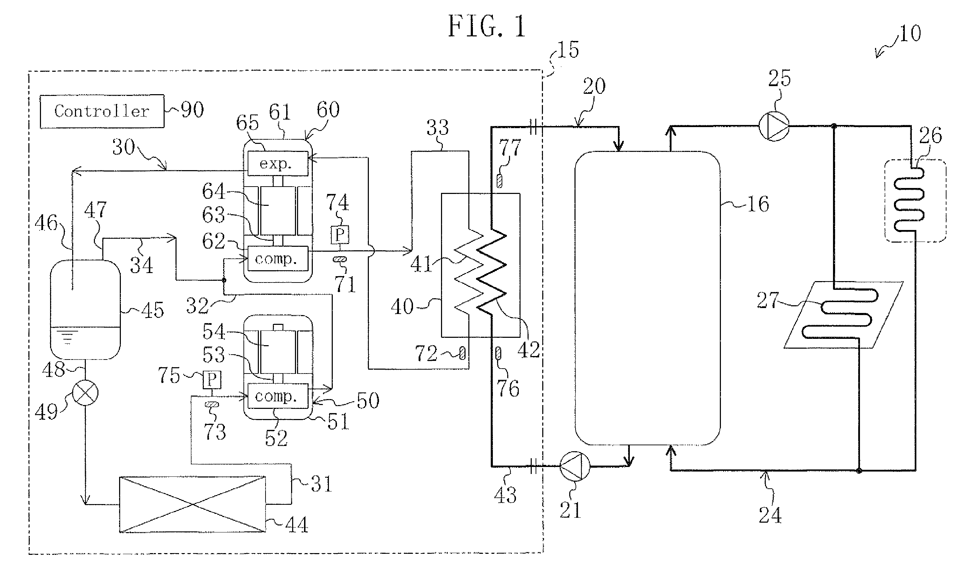

As shown in FIG. 1, the air-conditioning system (10) according to the embodiment includes the heat-source unit (15), a heat storage tank (16), a heat-source-side water circuit (20) and a utilization-side water circuit (24). A detailed configuration of the heat-source unit (15) will be later described.

The heat storage tank (16) is a closed container vertically longer than horizontally and filled with heating-medium water. The density of the heating-medium water lowers as the temperature thereof rises, and hence, the closer the water of the heat storage tank (16) comes to the top thereof, the higher the water temperature becomes, while the closer the water comes to the bottom, the lower the water temperature becomes. The heating-medium water stored in the heat storage tank (16) is not necessarily pure water and may be an antifreeze solution mixed with ethylene glycol or the like which has a lower freezing point.

The heat-source-side water circuit (20) is a closed circuit for circulating the heating-medium water between the heat-source unit (15) and the heat storage tank (16). Specifically, in the heat-source-side water circuit (20), the starting end thereof is connected to the bottom of the heat storage tank (16) while the terminal end thereof is connected to the top thereof. The heat-source-side water circuit (20) has a heat-source-side pump (21) and the heat-source unit (15) connected thereto in this order from the starting end toward the terminal end.

The utilization-side water circuit (24) is a closed circuit for circulating the heating-medium water between a heating radiator (26) or a floor-heating heat exchanger (27) and the heat storage tank (16). Specifically, in the utilization-side water circuit (24), the starting end thereof is connected to the top of the heat storage tank (16) while the terminal end thereof is connected to the bottom thereof. The utilization-side water circuit (24) has the heating radiator (26), the floor-heating heat exchanger (27) and a utilization-side pump (25) connected thereto. The utilization-side pump (25) is connected on the suction side to the top of the heat storage tank (16), and between the discharge side of the utilization-side pump (25) and the bottom of the heat storage tank (16), the heating radiator (26) and the floor-heating heat exchanger (27) are connected in parallel.

The heating radiator (26) is installed in an indoor space and heats indoor air by natural convection or radiation. The floor-heating heat exchanger (27) is buried under the floor of a living room and heats indoor air through the floor surface.

### (Configuration of heat-source unit)

The heat-source unit (15) includes a refrigerant circuit (30) having: a compressor unit (50); an expansion/compression unit (60); a water heat exchanger (40) as the utilization-side heat exchanger; a gas-liquid separator (45); an expansion valve (49) as the low-stage expansion mechanism; and an outdoor heat exchanger (44) as the heat-source-side heat exchanger. The refrigerant circuit (30) is filled with carbon dioxide (CO2) as a refrigerant.

The refrigerant circuit (30) has a low-stage compressor (52) of the compressor unit (50), a high-stage compressor (62) of the expansion/compression unit (60), the water heat exchanger (40), an expander (65) of the expansion/compression unit (60), the gas-liquid separator (45), the expansion valve (49) and the outdoor heat exchanger (44) which connect in series in this order along the refrigerant circulation direction. In the refrigerant circuit (30), suction-side piping (31) connects the outdoor heat exchanger (44) and the low-stage compressor (52), intermediate piping (32) connects the low-stage compressor (52) and the high-stage compressor (62) and discharge-side piping (33) connects the high-stage compressor (62) and the water heat exchanger (40).

The compressor unit (50) has a casing (51) shaped like a closed container vertically longer than horizontally. The casing (51) houses the low-stage compressor (52) and an electric motor (54). The low-stage compressor (52) is so-called rotary-type fluid machinery. The electric motor (54) is above the low-stage compressor (52) and connected to a drive shaft (53) of the low-stage compressor (52) and thereby rotates the low-stage compressor (52).

The expansion/compression unit (60) has a casing (61) shaped like a closed container vertically longer than horizontally. The casing (61) houses the high-stage compressor (62), an electric motor (64) and the expander (65). The high-stage compressor (62) and the expander (65) are both so-called rotary-type fluid machinery. The electric motor (64) and the expander (65) are both connected to a drive shaft (63) of the high-stage compressor (62). The electric motor (64) is above the high-stage compressor (62), the expander (65) is above the electric motor (64), and the electric motor (64) and the expander (65) rotate the high-stage compressor (62).

The water heat exchanger (40) is a so-called plate-type heat exchanger and is formed with a plurality of refrigerant passages (41) and a plurality of water passages (42). In the refrigerant circuit (30), each refrigerant passage (41) is connected between the high-stage compressor (62) and the expander (65). The water passages (42) are each connected through water piping (43) to the downstream side of the heat-source-side pump (21) in the heat-source-side water circuit (20). The refrigerant circuit (30) and the heat-source-side water circuit (20) are connected to the water heat exchanger (40) in such a way that the direction in which the refrigerant flows through the refrigerant passages (41) is opposite to the direction in which the heating-medium water flows through the water passages (42). The water heat exchanger (40) makes a heat exchange between the refrigerant flowing through the refrigerant passages (41) and the heating-medium water flowing through the water passages (42).

The gas-liquid separator (45) is shaped like a closed container vertically longer than horizontally and provided at the top with an inlet pipe (46) and a gas outlet pipe (47) and at the bottom with a liquid outlet pipe (48). The gas-liquid separator (45) separates a gas-liquid two-phase refrigerant which has flowed in through the inlet pipe (46) into a liquid refrigerant and a gas refrigerant. In the refrigerant circuit (30), the inlet pipe (46) of the gas-liquid separator (45) is connected to the outflow side of the expander (65); the liquid outlet pipe (48), to the expansion valve (49); and the gas outlet pipe (47), to the intermediate piping (32) via injection piping (34).

The expansion valve (49) is an electronic expansion valve including a needle valve body and a pulse motor driving the valve body. The inflow side of the expansion valve (49) is connected to the gas-liquid separator (45) and the outflow side thereof is connected to the outdoor heat exchanger (44).

The outdoor heat exchanger (44) is a so-called fin-and-tube air heat exchanger. The heat-source unit (15) is provided with an outdoor fan (not shown) sending outdoor air to the outdoor heat exchanger (44), and the outdoor heat exchanger (44) makes a heat exchange between outdoor air sent by the outdoor fan and the refrigerant.

The refrigerant circuit (30) is provided with a temperature sensor or a pressure sensor and the water piping (43) is provided with a temperature sensor.

The discharge-side piping (33) of the refrigerant circuit (30) is provided with a first refrigerant-temperature sensor (71) and a discharge pressure sensor (74) both of which are arranged near the discharge side of the high-stage compressor (62). The first refrigerant-temperature sensor (71) and the discharge pressure sensor (74) measure the temperature and the pressure of a refrigerant discharged from the high-stage compressor (62), respectively.

In the refrigerant circuit (30), the piping which connects the water heat exchanger (40) and the expander (65) is provided with a second refrigerant-temperature sensor (72). The second refrigerant-temperature sensor (72) is near the outlet of the refrigerant passages (41) of the water heat exchanger (40) and measures the temperature of a refrigerant flowing from the refrigerant passages (41).

The suction-side piping (31) of the refrigerant circuit (30) is provided with a third refrigerant-temperature sensor (73) and a suction pressure sensor (75) both of which are arranged near the suction side of the low-stage compressor (52). The third refrigerant-temperature sensor (73) and the suction pressure sensor (75) measure the temperature and the pressure of a refrigerant sucked into the low-stage compressor (52), respectively.

The water piping (43) is provided with an inlet water-temperature sensor (76) and an outlet water-temperature sensor (77). The inlet water-temperature sensor (76) is near the inflow side of the water passages (42) of the water heat exchanger (40) in the water piping (43) and measures the temperature of heating-medium water flowing into the water heat exchanger (40). On the other hand, the outlet water-temperature sensor (77) is near the outflow side of the water passages (42) of the water heat exchanger (40) in the water piping (43) and measures the temperature of heating-medium water flowing from the water heat exchanger (40).

The heat-source unit (15) is provided with a controller (90) as the control means which receives measurement values obtained by the above temperature sensors and pressure sensors and controls the operation of the heat-source unit (15) based on the measurement values.

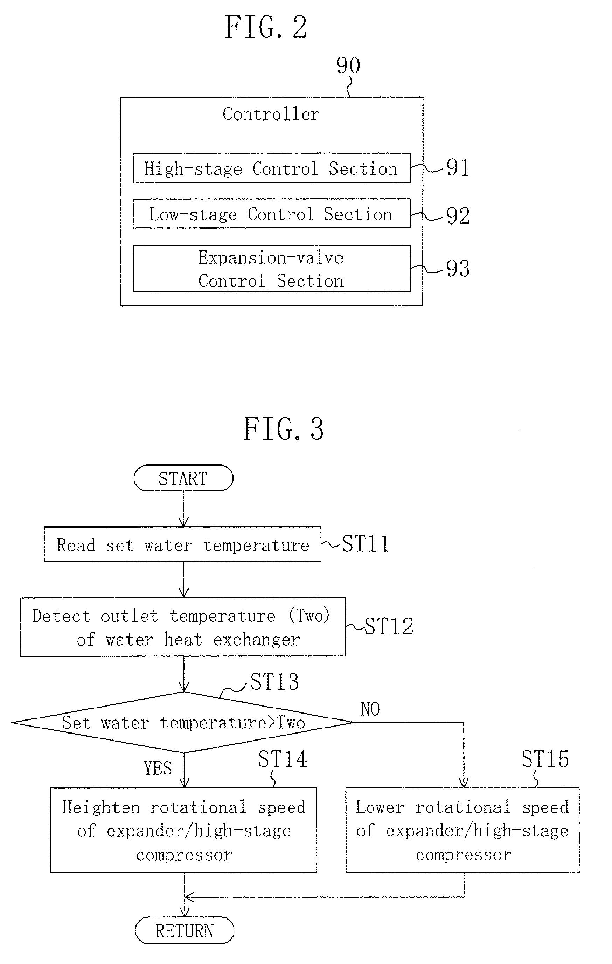

As shown in FIG. 2, the controller (90) includes a high-stage control section (91), a low-stage control section (92) and an expansion-valve control section (93). The high-stage control section (91) executes a first control operation for adjusting the rotational speed of the high-stage compressor (62) and the expander (65) by varying the frequency of an alternating current inputted in the electric motor (64) of the expansion/compression unit (60). The low-stage control section (92) executes a second control operation for adjusting the rotational speed of the low-stage compressor (52) by varying the frequency of an alternating current inputted in the electric motor (54) of the compressor unit (50). The expansion-valve control section (93) executes a third control operation for adjusting the opening of the expansion valve (49).

### -Operation-

An operation of the air-conditioning system (10) will be described.

In the refrigerant circuit (30) of the heat-source unit (15), carbon dioxide filled as a refrigerant is circulated to thereby conduct a two-stage compression refrigeration cycle. The high pressure of the refrigeration cycle conducted in the refrigerant circuit (30) is set to a value higher than the critical pressure of carbon dioxide.

In the refrigerant circuit (30), a high-pressure refrigerant discharged from the high-stage compressor (62) passes through the discharge-side piping (33), flows into the refrigerant passages (41) of the water heat exchanger (40) and dissipates heat to heating-medium water flowing through the water passages (42) thereof. The high-pressure refrigerant which has dissipated heat in the water heat exchanger (40) flows into the expander (65), expands there to turn into an intermediate-pressure refrigerant in a gas-liquid two-phase state and flows into the gas-liquid separator (45). In the expander (65), the internal energy of the high-pressure refrigerant is converted into rotational power, and the power obtained in the expander (65) is transmitted to the drive shaft (63) of the high-stage compressor (62).

In the gas-liquid separator (45), the intermediate-pressure refrigerant which has flowed in is separated into a liquid refrigerant and a gas refrigerant. The liquid refrigerant flows through the liquid outlet pipe (48) from the liquid outlet pipe (48), further expands when passing the expansion valve (49) and turns to a low-pressure refrigerant. The low-pressure refrigerant flows into the outdoor heat exchanger (44), absorbs heat from outdoor air and thereby evaporates. Thereafter, the low-pressure refrigerant which has flowed from the outdoor heat exchanger (44) is sucked into the low-stage compressor (52).

The low-pressure refrigerant which has been sucked into the low-stage compressor (52) is compressed and thereby turns to an intermediate-pressure refrigerant and then is discharged to the intermediate piping (32). The intermediate-pressure refrigerant which has been discharged from the low-stage compressor (52) to the intermediate piping (32) meets an intermediate-pressure gas refrigerant supplied through the injection piping (34) from the gas-liquid separator (45), and then, is sucked together with the gas refrigerant into the high-stage compressor (62). The refrigerant which has been sucked into the high-stage compressor (62) is compressed and thereby turns to a high-pressure refrigerant, and thereafter, is discharged to the discharge-side piping (33).

When the refrigeration cycle is conducted in the refrigerant circuit (30) of the heat-source unit (15), the heat-source-side pump (21) comes into operation and thereby circulates heating-medium water through the heat-source-side water circuit (20). Specifically, in the heat-source-side water circuit (20), the heat-source-side pump (21) sucks the heating-medium water having a relatively low temperature (e.g., approximately 25 °C) from the bottom of the heat storage tank (16), and thereafter, sends it into the water passages (42) of the water heat exchanger (40). The heating-medium water which has flowed into the water passages (42) of the water heat exchanger (40) absorbs heat from the refrigerant flowing through the refrigerant passages (41) thereof and heats up to, for example, approximately 90 °C. The heating-medium water which has been heated in the water heat exchanger (40) is sent back to the top of the heat storage tank (16). If the heating-medium water having a relatively high temperature (e.g., approximately 80 to 90 °C) occupies most of the space inside of the heat storage tank (16), then the heat-source unit (15) or the heat-source-side pump (21) comes to a stop.

While the air-conditioning system (10) is operating, the utilization-side pump (25) is basically kept in operation, and while the utilization-side pump (25) is operating, the heating-medium water circulates through the utilization-side water circuit (24). Specifically, in the utilization-side water circuit (24), the utilization-side pump (25) sucks the heating-medium water having a high temperature (e.g., approximately 80 °C) from the top of the heat storage tank (16) and sends a part of the high-temperature heating-medium water to the floor-heating heat exchanger (27) and the rest thereof to the heating radiator (26). The heating-medium water which has been sent to the floor-heating heat exchanger (27) or the heating radiator (26) dissipates heat to indoor air and thereby falls in temperature. The heating-medium water which has fallen in temperature in the floor-heating heat exchanger (27) or the heating radiator (26) is sent back to the bottom of the heat storage tank (16).

### -Control operation of controller-

A control operation of the controller (90) will be described. As described earlier, in the controller (90), the high-stage control section (91), the low-stage control section (92) and the expansion-valve control section (93) execute the first control operation, the second control operation and the third control operation, respectively. The three control operations are individually executed with no relation to each other.

### 〈First control operation of high-stage control section〉

The first control operation executed by the high-stage control section (91) will be described.

As the mass flow rate of a refrigerant passing through the refrigerant passages (41) of the water heat exchanger (40) heightens or lowers, the heating capacity obtained in the water heat exchanger (40) working as a gas cooler rises or falls. Meanwhile, the high-stage compressor (62), the water heat exchanger (40) and the expander (65) are connected in series in the refrigerant circuit (30), and hence, the mass flow rate of the refrigerant passing the three component elements is always the same. Accordingly, in order to vary the mass flow rate of the refrigerant passing the water heat exchanger (40), the mass flow rate of the refrigerant discharged from the high-stage compressor (62) needs varying, thereby also varying the mass flow rate of the refrigerant flowing into the expander (65).

Therefore, the high-stage control section (91) of the controller (90) executes the first control operation for adjusting the rotational speed of the high-stage compressor (62) in such a way that the heating capacity obtained in the water heat exchanger (40) becomes a predetermined target capacity. At this time, the high-stage control section (91) uses the temperature of a heating-medium water which has passed the water heat exchanger (40) as a physical quantity indicating the heating capacity obtained in the water heat exchanger (40). If the temperature of the heating-medium water which has passed the water heat exchanger (40) becomes a predetermined target temperature, then the decision can be made that the heating capacity obtained in the water heat exchanger (40) has become the target capacity. Therefore, the high-stage control section (91) adjusts the rotational speed of the high-stage compressor (62) in such a way that the temperature of the heating-medium water which has passed the water heat exchanger (40) becomes the predetermined target temperature.

In the expansion/compression unit (60) according to the embodiment, the expander (65) is connected to the drive shaft (63) of the high-stage compressor (62), and hence, the rotational speed of the expander (65) is always identical to the rotational speed of the high-stage compressor (62). Assuming that the density of a refrigerant sucked into the high-stage compressor (62) is constant, the higher the rotational speed of the high-stage compressor (62) becomes, the higher the mass flow rate of the refrigerant discharged from the high-stage compressor (62) becomes. Similarly, assuming that the density of a refrigerant flowing into the expander (65) is constant, the higher the rotational speed of the expander (65) becomes, the higher the mass flow rate of the refrigerant flowing into the expander (65) becomes. The high-stage control section (91) adjusts the rotational speed of the high-stage compressor (62) to thereby change the mass flow rate of the refrigerant flowing from the high-stage compressor (62) via the water heat exchanger (40) into the expander (65). As a result, the mass flow rate of the refrigerant passing through the refrigerant passages (41) of the water heat exchanger (40) becomes the value at which the temperature of the heating-medium water at the outlet of the water heat exchanger (40) comes to the target temperature.

The first control operation will be specifically described with reference to the flow chart of FIG. 3.

In a step ST11 of the first control operation, the high-stage control section (91) reads a set water temperature. The set water temperature may be a predetermined value (e.g., 90 ° C) stored beforehand in the controller (90) or a value inputted with a remote control or the like by a user. In the next step ST12, the high-stage control section (91) reads a measured value Two (i.e., actually measured value of the temperature of the heating-medium water at the outlet of the water passages (42) of the water heat exchanger (40)) by the outlet water-temperature sensor (77).

Next, in a step ST13, the high-stage control section (91) compares the measured value Two of the outlet water-temperature sensor (77) and the set water temperature. If the measured value Two of the outlet water-temperature sensor (77) is lower than the set water temperature, the high-stage control section (91) shifts the processing to a step ST14. On the other hand, if the measured value Two is equal to, or higher than, the set water temperature, then it shifts the processing to a step ST15.

In the step ST14, the high-stage control section (91) raises the frequency of an alternating current inputted in the electric motor (64) of the expansion/compression unit (60) to thereby heighten the rotational speed of the high-stage compressor (62) and the expander (65). If the measured value Two of the outlet water-temperature sensor (77) is lower than the set water temperature, the decision can be made that the quantity of heat given to the heating-medium water in the water heat exchanger (40) is insufficient. Therefore, the high-stage control section (91) heightens the rotational speed of the high-stage compressor (62) and the expander (65) to thereby raise the flow rate of the refrigerant passing through the refrigerant passages (41) of the water heat exchanger (40).

On the other hand, in the step ST15, the high-stage control section (91) lowers the frequency of the alternating current inputted in the electric motor (64) of the expansion/compression unit (60) to thereby lower the rotational speed of the high-stage compressor (62) and the expander (65). If the measured value Two of the outlet water-temperature sensor (77) is the set water temperature or above, the decision can be made that the quantity of heat given to the heating-medium water in the water heat exchanger (40) is sufficient. Therefore, the high-stage control section (91) lowers the rotational speed of the high-stage compressor (62) and the expander (65) to thereby lower the flow rate of the refrigerant passing through the refrigerant passages (41) of the water heat exchanger (40).

### 〈Second control operation of low-stage control section〉

The second control operation executed by the low-stage control section (92) will be described. The second control operation is designed to adjust the rotational speed of the low-stage compressor (52) in such a way that the high pressure of the refrigeration cycle conducted through the refrigerant circuit (30) becomes a target high pressure.

In the refrigeration cycle (called a supercritical cycle) which the high pressure becomes higher than the critical pressure of the refrigerant, the COP (coefficient of performance) of the refrigeration cycle varies according to the high-pressure value, though the operation conditions other than the high pressure are the same. Therefore, the low-stage control section (92) sets the target high pressure to a high-pressure value of the refrigeration cycle at which the COP comes to the maximum and adjusts the rotational speed of the low-stage compressor (52) in such a way that the high pressure of the refrigeration cycle practically conducted through the refrigerant circuit (30) becomes the target high pressure.

As described earlier, the high-stage control section (91) executes the first control operation to thereby set the rotational speed of the high-stage compressor (62) and the expander (65) in such a way that the temperature (i.e., value measured by the outlet water-temperature sensor (77)) of the heating-medium water flowing from the water heat exchanger (40) becomes the target temperature. Meanwhile, the mass flow rate of the refrigerant passing the high-stage compressor (62) or the expander (65) is determined by the rotational speed thereof and the density of the refrigerant flowing into them. Besides, in the refrigerant circuit (30), the high-stage compressor (62) and the expander (65) are connected in series in the refrigerant circuit (30), and hence, the mass flow rate of the refrigerant discharged from the high-stage compressor (62) is constantly equal to the mass flow rate of the refrigerant passing the expander (65). Accordingly, in order to set the high pressure of the refrigeration cycle to the target high pressure, the mass flow rate of the refrigerant passing the high-stage compressor (62) needs to equate to the mass flow rate of the refrigerant flowing into the expander (65) when the pressure of the refrigerant flowing into the expander (65) is the target high pressure.

Therefore, the low-stage control section (92) of the controller (90) executes the second control operation for adjusting the rotational speed of the low-stage compressor (52) in such a way that the high pressure of the refrigeration cycle conducted through the refrigerant circuit (30) becomes a predetermined target high pressure.

The rotational speed of the low-stage compressor (52) is varied to change the pressure of the refrigerant discharged from the low-stage compressor (52) and thereby change the density of the refrigerant sucked into the high-stage compressor (62). Specifically, the higher the pressure of the refrigerant discharged from the low-stage compressor (52) becomes, the higher the density of the refrigerant sucked into the high-stage compressor (62) becomes. Conversely, the lower the pressure thereof becomes, the lower the density thereof becomes. Therefore, the rotational speed of the low-stage compressor (52) is varied to thereby change the mass flow rate of the refrigerant sucked into the high-stage compressor (62) even though the rotational speed of the high-stage compressor (62) is fixed.

In addition, as the pressure of the refrigerant discharged from the low-stage compressor (52) varies, the mass flow rate of a gas refrigerant flowing from the gas-liquid separator (45) through the injection piping (34) into the intermediate piping (32) varies to thereby vary the mass flow rate of the refrigerant sucked into the high-stage compressor (62).

The low-stage control section (92) executes the second control operation and adjusts the rotational speed of the low-stage compressor (52) to thereby equate the mass flow rate of the refrigerant sucked into the high-stage compressor (62) to the mass flow rate of the refrigerant flowing into the expander (65) when the high pressure of the refrigeration cycle is the target high pressure. As a result, the high pressure (i.e., value measured by the discharge pressure sensor (74)) of the refrigeration cycle practically conducted through the refrigerant circuit (30) becomes the target high pressure.

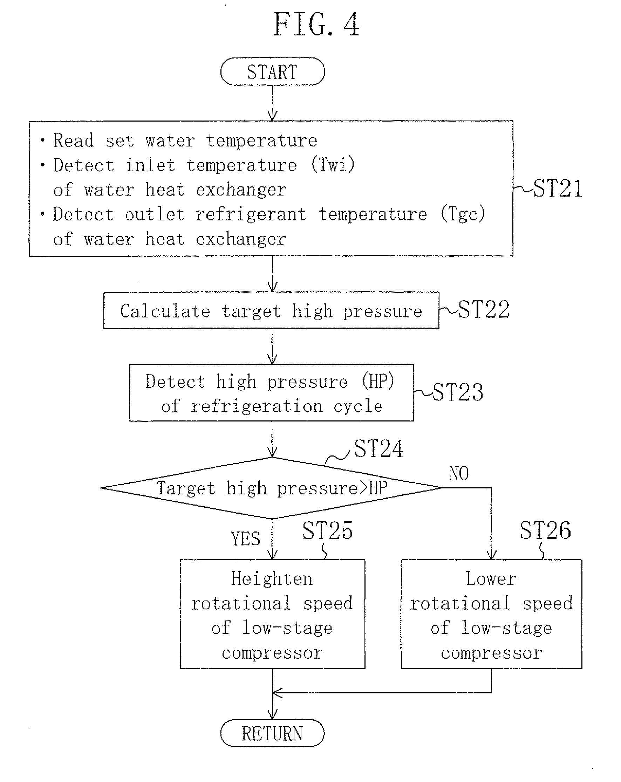

The second control operation will be specifically described with reference to the flow chart of FIG. 4.

In a step ST21 of the second control operation, in the same way as the step ST11 of the first control operation, the low-stage control section (92) reads a set water temperature. In the step ST21, the low-stage control section (92) also reads a measured value Twi (i.e., actually measured value of the temperature of the heating-medium water at the inlet of the water passages (42) of the water heat exchanger (40)) by the inlet water-temperature sensor (76) and a measured value Tgc (i.e., actually measured value of the temperature of the refrigerant at the outlet of the refrigerant passages (41) of the water heat exchanger (40) working as a gas cooler) by the second refrigerant-temperature sensor (72).

In the next step ST22, the low-stage control section (92) calculates a target high pressure based on the set water temperature, the measured value Twi of the inlet water-temperature sensor (76) and the measured value Tgc of the second refrigerant-temperature sensor (72) which have been read at the step ST21.

Specifically, the low-stage control section (92) determines a tentative target high pressure based on the set water temperature and the measured value Twi of the inlet water-temperature sensor (76) and calculates a difference (Tgc-Twi) between the measured value Tgc of the second refrigerant-temperature sensor (72) and the measured value Twi of the inlet water-temperature sensor (76). If the difference (Tgc-Twi) is larger than a predetermined reference value, then the low-stage control section (92) corrects the tentatively-determined target high pressure in such a way that the value thereof becomes larger and determines the value after the correction as a final target high-pressure value. On the other hand, if the difference (Tgc-Twi) is smaller than the predetermined reference value, then the low-stage control section (92) corrects the tentatively-determined target high pressure in such a way that the value thereof becomes smaller and determines the value after the correction as the final target high-pressure value. In addition, if the difference (Tgc-Twi) is equal to the predetermined reference value, the low-stage control section (92) determines the tentatively-determined target high-pressure value itself as the final target high-pressure value.

Then, in a step ST23, the low-stage control section (92) reads a measured value HP (i.e., actually measured value of the high pressure of the refrigeration cycle) by the discharge pressure sensor (74). In the next step ST24, the low-stage control section (92) compares the measured value HP of the discharge pressure sensor (74) and the target high pressure. If the measured value HP of the discharge pressure sensor (74) is lower than the target high pressure, the low-stage control section (92) shifts the processing to a step ST25, while if the measured value HP is equal to, or higher than, the target high pressure, then the low-stage control section (92) shifts the processing to a step ST26.

In the step ST25, the low-stage control section (92) raises the frequency of an alternating current inputted in the electric motor (54) of the compressor unit (50) to thereby heighten the rotational speed of the low-stage compressor (52). If the measured value HP of the discharge pressure sensor (74) is lower than the target high pressure, the decision can be made that the mass flow rate of the refrigerant discharged from the high-stage compressor (62) is too low. Therefore, the low-stage control section (92) raises the rotational speed of the low-stage compressor (52) to thereby heighten the pressure of the refrigerant discharged from the low-stage compressor (52) (i.e., the pressure of the refrigerant sucked into the high-stage compressor (62)). As the pressure of the refrigerant sucked into the high-stage compressor (62) goes up, the density of the refrigerant sucked into the high-stage compressor (62) rises to thereby heighten the mass flow rate of the refrigerant discharged from the high-stage compressor (62), even though the rotational speed of the high-stage compressor (62) is fixed.

On the other hand, in the step ST26, the low-stage control section (92) lowers the frequency of the alternating current inputted in the electric motor (54) of the compressor unit (50) to thereby lower the rotational speed of the low-stage compressor (52). If the measured value HP of the discharge pressure sensor (74) is the target high pressure or above, the decision can be made that the mass flow rate of the refrigerant discharged from the high-stage compressor (62) is too high. Therefore, the low-stage control section (92) lowers the rotational speed of the low-stage compressor (52) to thereby lower the pressure of the refrigerant discharged from the low-stage compressor (52) (i.e., the pressure of the refrigerant sucked into the high-stage compressor (62)). As the pressure of the refrigerant sucked into the high-stage compressor (62) goes down, the density of the refrigerant sucked into the high-stage compressor (62) lowers to thereby lower the mass flow rate of the refrigerant discharged from the high-stage compressor (62), even though the rotational speed of the high-stage compressor (62) is fixed.

### (Third control operation of expansion-valve control section)

The third control operation executed by the expansion-valve control section (93) will be described. The third control operation is designed to adjust the opening of the expansion valve (49) in such a way that the superheat of a refrigerant sucked into the low-stage compressor (52) becomes a predetermined target value of superheat.

Here, the heat-source unit (15) which heats heating-medium water inside of the heat storage tank (16) needs to keep the temperature of the heating-medium water sent back to the heat storage tank (16) from the heat-source unit (15) at a predetermined target value. Further, the water heat exchanger (40) is a counter-flow heat exchanger where the flow direction of the refrigerant through the refrigerant passages (41) is opposite to the flow direction of the heating-medium water in the water heat exchanger (40). Accordingly, the temperature of the refrigerant sent from the high-stage compressor (62) to the water heat exchanger (40) needs to be higher than the temperature of the heating-medium water sent from the water heat exchanger (40) to the heat storage tank (16). In order to vary the temperature of the refrigerant discharged from the high-stage compressor (62), the temperature of the refrigerant sucked into the high-stage compressor (62) has to be varied, and this variation can be realized by adjusting the superheat of the refrigerant sucked into the low-stage compressor (52).

Therefore, the expansion-valve control section (93) sets the target value of superheat to the superheat of the refrigerant sucked into the low-stage compressor (52) at which the temperature of the refrigerant discharged from the high-stage compressor (62) becomes a desired value, and then, adjusts the opening of the expansion valve (49) in such a way that the superheat of the refrigerant practically sucked into the low-stage compressor (52) becomes the target value of superheat.

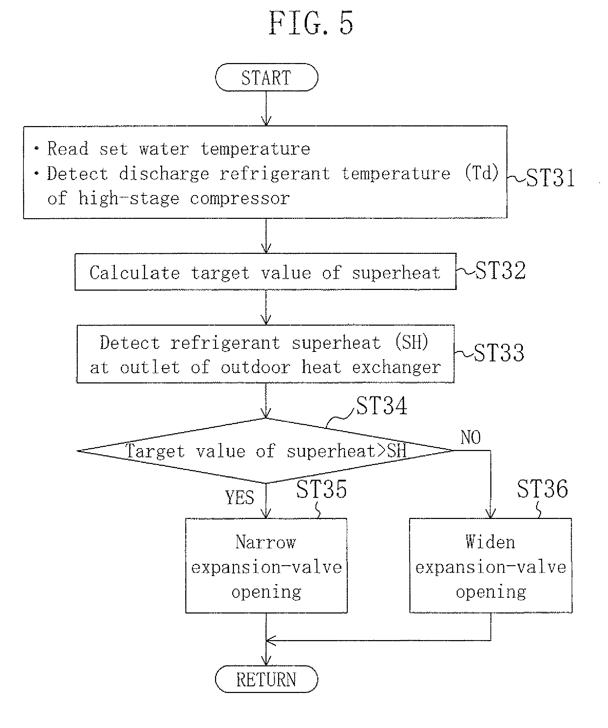

The third control operation will be specifically described with reference to the flow chart of FIG. 5.

In a step ST31 of the third control operation, in the same way as the step ST11 of the first control operation, the expansion-valve control section (93) reads a set water temperature. In the step ST31, the expansion-valve control section (93) also reads a measured value Td (i.e., temperature of the refrigerant discharged from the high-stage compressor (62)) by the first refrigerant-temperature sensor (71).

In the next step ST32, the expansion-valve control section (93) calculates a target value of superheat based on the set water temperature and the measured value Td of the first refrigerant-temperature sensor (71). Specifically, on the basis of the set water temperature, the expansion-valve control section (93) determines a target value (target discharge temperature) of the temperature of the refrigerant discharged from the high-stage compressor (62). For example, the expansion-valve control section (93) sets a value higher by a predetermined value (e.g., 10 °C) than the set water temperature as the target discharge temperature. Then, the expansion-valve control section (93) determines the target value of superheat according to the determined target discharge temperature. The target value of superheat is set to a higher value as the target discharge temperature rises.

Then, in a step ST33, the expansion-valve control section (93) detects a superheat SH of the refrigerant sucked into the low-stage compressor (52). Specifically, the expansion-valve control section (93) reads a value measured by the third refrigerant-temperature sensor (73) and a value measured by the suction pressure sensor (75) and calculates the superheat SH of the refrigerant sucked into the low-stage compressor (52) by subtracting the saturation temperature of the refrigerant corresponding to the measured value of the suction pressure sensor (75) from the measured value of the third refrigerant-temperature sensor (73).

Next, in a step ST34, the expansion-valve control section (93) compares the superheat SH of the refrigerant sucked into the low-stage compressor (52) calculated at the step ST33 with the target value of superheat. If the superheat SH of the refrigerant sucked into the low-stage compressor (52) is lower than the target value of superheat, then the expansion-valve control section (93) shifts the processing to a step ST35, while if the superheat SH is equal to, or higher than, the target value of superheat, then it shifts the processing to a step ST36.

In the step ST35, the expansion-valve control section (93) narrows the opening of the expansion valve (49). If the superheat SH of the refrigerant sucked into the low-stage compressor (52) is lower than the target value of superheat, the decision can be made that the mass flow rate of the refrigerant supplied to the outdoor heat exchanger (44) is too high. Therefore, the expansion-valve control section (93) narrows the opening of the expansion valve (49) to thereby lower the mass flow rate of the refrigerant sent to the outdoor heat exchanger (44) from the gas-liquid separator (45).

On the other hand, in the step ST36, the expansion-valve control section (93) widens the opening of the expansion valve (49). If the superheat SH of the refrigerant sucked into the low-stage compressor (52) is equal to, or higher than, the target value of superheat, the decision can be made that the mass flow rate of the refrigerant supplied to the outdoor heat exchanger (44) is too low. Therefore, the expansion-valve control section (93) widens the opening of the expansion valve (49) to thereby heighten the mass flow rate of the refrigerant sent to the outdoor heat exchanger (44) from the gas-liquid separator (45).

### -Advantages of the embodiment-

In the controller (90) according to the embodiment, the high-stage control section (91) executes the first control operation for adjusting the rotational speed of the high-stage compressor (62) (i.e., the rotational speed of the expander (65)) in such a way that the heating capacity obtained in the water heat exchanger (40) becomes the target capacity, and the low-stage control section (92) executes the second control operation for adjusting the rotational speed of the low-stage compressor (52) in such a way that the high pressure of the refrigeration cycle conducted through the refrigerant circuit (30) becomes the predetermined target high pressure.

Therefore, even if the high-stage control section (91) executes the first control operation to thereby fix the rotational speed of the high-stage compressor (62) and the expander (65), the low-stage control section (92) executes the second control operation, thereby making it possible to change the density of the refrigerant sucked into the high-stage compressor (62) and adjust the mass flow rate of the refrigerant discharged from the high-stage compressor (62) or the mass flow rate of the refrigerant flowing into the expander (65). As a result, even without the bypass circuit for allowing a refrigerant to partly bypass the expander (65) according to the prior art, the density of the refrigerant sucked into the high-stage compressor (62) can be adjusted to thereby equate the mass flow rate of the refrigerant sucked into the high-stage compressor (62) to the mass flow rate of the refrigerant flowing into the expander (65) if the high pressure in the refrigeration cycle is the target high pressure.

Consequently, according to the embodiment, the whole quantity of the refrigerant discharged from the high-stage compressor (62) can be sent into the expander (65) to thereby maximize the power obtained in the expander (65), and an operation state of the refrigeration cycle conducted through the refrigerant circuit (30) can be suitably set according to various operation conditions.

In the air-conditioning system (10) according to the embodiment which conducts heating by utilizing radiation or natural convection, the temperature of the heating-medium water sent from the heat storage tank (16) to the heat-source unit (15) varies significantly in accordance with the heating load. Specifically, when the heating load is relatively light at an outdoor air temperature of approximately 7 °C, a sufficient heating capacity can be secured even if the surface temperature of the heating radiator (26) or the floor-heating heat exchanger (27) is not very high. Therefore, the flow rate of the heating-medium water circulating through the utilization-side water circuit (24) is set to a relatively small value, and thereby, the temperature of the heating-medium water returning from the utilization-side water circuit (24) to the heat storage tank (16) becomes relatively low (e.g., approximately 30 °C). On the other hand, when the heating load is relatively heavy at an outdoor air temperature of approximately -7 °C, in order to secure a sufficient heating capacity, the surface temperature of the heating radiator (26) or the floor-heating heat exchanger (27) needs to be kept high. Therefore, the flow rate of the heating-medium water circulating through the utilization-side water circuit (24) is set to a relatively large value, and thereby, the temperature of the heating-medium water returning from the utilization-side water circuit (24) to the heat storage tank (16) becomes relatively high (e.g., approximately 70 °C).

In this manner, if the temperature of the heating-medium water sent from the heat storage tank (16) to the heat-source unit (15) varies significantly, the operation state of the refrigeration cycle also varies largely. This makes it difficult to set the operation conditions of the refrigeration cycle (e.g., the high pressure of the refrigeration cycle) to desired conditions in the refrigerant circuit (30) which includes the expansion/compression unit (60) formed by connecting the expander (65) to the drive shaft (63) of the high-stage compressor (62).

In contrast, the heat-source unit (15) according to the embodiment is capable of sending the whole quantity of the refrigerant passing the water heat exchanger (40) into the expander (65) and setting the high pressure of the refrigeration cycle suitably by adjusting the rotational speed of the low-stage compressor (52). Therefore, according to the embodiment, even in the air-conditioning system (10) which conducts heating by utilizing radiation or natural convection, the power obtained in the expander (65) can be sufficiently secured and the controllability of the heat-source unit (15) can be improved.

### -Variation 1 of the embodiment-

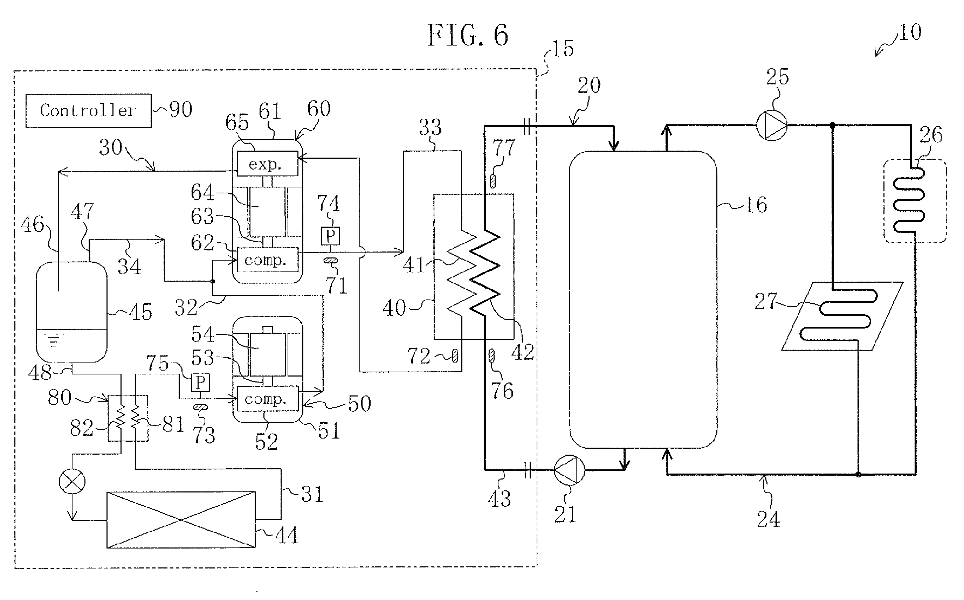

In the heat-source unit (15) according to the above embodiment, as shown in FIG. 6, the refrigerant circuit (30) may be provided with an internal heat exchanger (80).

The internal heat exchanger (80) is a plate-type heat exchanger formed with a plurality of first passages (81) and a plurality of second passages (82). The first passages (81) of the internal heat exchanger (80) are connected to a middle part of the suction-side piping (31) connecting the outdoor heat exchanger (44) and the low-stage compressor (52), while the second passages (82) of the internal heat exchanger (80) are connected to a middle part of the piping connecting the gas-liquid separator (45) and the expansion valve (49). Hence, the internal heat exchanger (80) makes a heat exchange between the refrigerant flowing through the first passages (81) (i.e., low-pressure gas refrigerant evaporated in the outdoor heat exchanger (44) and sucked into the low-stage compressor (52)) and the refrigerant flowing through the second passages (82) (i.e., intermediate-pressure liquid refrigerant flowing from the gas-liquid separator (45) to the expansion valve (49). In this variation, the suction-side piping (31) is provided with the third refrigerant-temperature sensor (73) and the suction pressure sensor (75) arranged between the internal heat exchanger (80) and the low-stage compressor (52).

In the internal heat exchanger (80), the refrigerant flowing through the first passages (81) is cooled by the refrigerant flowing through the second passages (82). Therefore, the enthalpy of the refrigerant sent to the outdoor heat exchanger (44) working as an evaporator is reduced to thereby increase the quantity of heat absorbed from outdoor air by the refrigerant in the outdoor heat exchanger (44). Further, in the internal heat exchanger (80), the refrigerant flowing through the second passages (82) is heated by the refrigerant flowing through the first passages (81). Therefore, the superheat of the refrigerant sucked into the low-stage compressor (52) heightens to thereby raise the temperature of the refrigerant discharged from the high-stage compressor (62) and sent to the water heat exchanger (40).

### -Variation 2 of the embodiment-

In the above embodiment, the heat-source unit (15) which heats heating-medium water is configured by the refrigerating apparatus according to the present invention. However, the refrigerating apparatus according to the present invention is not limited to this utilization. Specifically, for example, a general air conditioner making a heat exchange between indoor air and a refrigerant of the refrigerant circuit (30) may be configured by the refrigerating apparatus according to the present invention. In this case, instead of the water heat exchanger (40), an air heat exchanger making a heat exchange between air and a refrigerant is provided in the refrigerant circuit (30) as a utilization-side heat exchanger.

Moreover, the air conditioner may conduct only either of a heating operation allowing the air heat exchanger as a utilization-side heat exchanger to work as a gas cooler and a cooling operation allowing the air heat exchanger as the utilization-side heat exchanger to work as an evaporator. Alternatively, it may switch from the heating operation to the cooling operation, and vice versa. During the cooling operation, the high-stage control section (91) of the controller (90) executes the first control operation for adjusting the rotational speed of the high-stage compressor (62) in such a way that the cooling capacity obtained in the air heat exchanger as the utilization-side heat exchanger becomes a predetermined target capacity.

### -Variation 3 of the embodiment-

In the above embodiment, the low-stage compressor (52), the high-stage compressor (62) and the expander (65) are rotary-type fluid machinery, but the fluid machinery is not limited to this type. The fluid machinery forming each of the low-stage compressor (52), the high-stage compressor (62) and the expander (65) may be positive-displacement-type fluid machinery having a fixed displacement such as scroll-type fluid machinery.

The aforementioned embodiment is essentially preferred illustrations, and hence, the scope of the present invention, the one applied thereto or the use thereof is not supposed to be limited.

### INDUSTRIAL APPLICABILITY

As described so far, the present invention is useful for a refrigerating apparatus which includes a refrigerant circuit having an expander for power recovery connected thereto.

### DESCRIPTION OF REFERENCE CHARACTERS

- 15: Heat-source Unit (refrigerating apparatus)
- 30: Refrigerant Circuit
- 40: Water Heat Exchanger (Utilization-side Heat Exchanger)
- 44: Outdoor Heat Exchanger (Heat-source-side Heat Exchanger)
- 45: Gas-liquid Separator
- 49: Expansion Valve (Low-stage Expansion Mechanism)
- 52: Low-stage Compressor
- 62: High-stage Compressor
- 65: Expander
- 80: Internal Heat Exchanger
- 90: Controller (Control Means)

## Claims

1. A refrigerating apparatus which conducts a two-stage compression refrigeration cycle by circulating a refrigerant through a refrigerant circuit (30), the refrigerant circuit (30) being formed by connecting: a low-stage compressor (52) and a high-stage compressor (62) each rotating to compress a refrigerant; an expander (65) connected to a drive shaft (63) of the high-stage compressor (62) and driving the high-stage compressor (62) with power generated by the expansion of a high-pressure refrigerant; a gas-liquid separator (45) separating an intermediate-pressure refrigerant flowing from the expander (65) into a liquid refrigerant and a gas refrigerant and supplying the gas refrigerant to the suction side of the high-stage compressor (62); a low-stage expansion mechanism (49) expanding a liquid refrigerant flowing from the gas-liquid separator (45); a utilization-side heat exchanger (40); and a heat-source-side heat exchanger (44),
wherein a control means (90) is provided which executes: a first control operation for adjusting the rotational speed of the high-stage compressor (62) in such a way that a heating capacity or a cooling capacity obtained in the utilization-side heat exchanger (40) becomes a predetermined target capacity; and a second control operation for adjusting the rotational speed of the low-stage compressor (52) in such a way that a high pressure in the refrigeration cycle conducted through the refrigerant circuit (30) becomes a predetermined target high pressure.

2. The refrigerating apparatus according to claim 1, wherein:
the utilization-side heat exchanger (40) works as a radiator and the heat-source-side heat exchanger (44) works as an evaporator to thereby conduct a heating operation; and
in the first control operation during the heating operation, the control means (90) uses the temperature of a heating fluid after passing the utilization-side heat exchanger (40) as a physical quantity indicating a heating capacity obtained in the utilization-side heat exchanger (40) and adjusts the rotational speed of the high-stage compressor (62) in such a way that the temperature of the heating fluid after passing the utilization-side heat exchanger (40) becomes a predetermined target temperature.

3. The refrigerating apparatus according to claim 1, wherein:
the utilization-side heat exchanger (40) works as a radiator and the heat-source-side heat exchanger (44) works as an evaporator to thereby conduct a heating operation; and
during the heating operation, the control means (90) sets the target high pressure based on the temperature of a refrigerant flowing from the utilization-side heat exchanger (40) and the temperature of a heating fluid flowing into the utilization-side heat exchanger (40).

4. The refrigerating apparatus according to claim 1, wherein:
the refrigerant circuit (30) is provided with an opening-variable expansion valve (49) as the low-stage expansion mechanism; and
the control means (90) executes a third control operation for adjusting the opening of the expansion valve (49) in such a way that the superheat of a refrigerant sucked into the low-stage compressor (52) becomes a predetermined target value of superheat.

5. The refrigerating apparatus according to claim 4, wherein:
the utilization-side heat exchanger (40) works as a radiator and the heat-source-side heat exchanger (44) works as an evaporator to thereby conduct a heating operation; and
the control means (90) sets the target value of superheat based on the temperature of a refrigerant discharged from the high-stage compressor (62) during the heating operation.

6. The refrigerating apparatus according to claim 1, wherein the utilization-side heat exchanger (40) works as a radiator and the heat-source-side heat exchanger (44) works as an evaporator to thereby conduct a heating operation for heating water through a heat exchange with a refrigerant in the utilization-side heat exchanger (40).

7. The refrigerating apparatus according to claim 1, wherein the refrigerant circuit (30) is provided with an internal heat exchanger (80) making a heat exchange between a refrigerant sent to the low-stage expansion mechanism (49) from the gas-liquid separator (45) and a refrigerant sucked into the low-stage compressor (52).
